# EUROPÄISCHE PATENTSCHRIFT

(11) **EP 1 074 145 B1**
(45) Veröffentlichungstag und Bekanntmachung des Hinweises auf die Patenterteilung: **06.08.2003**
(21) Anmeldenummer: 99923381.0
(22) Anmeldetag: 22.03.1999
(51) Int. Cl.: H04N 7/035

(54) **EMPFANGSGERÄT ZUM EMPFANGEN VON VIDEO- UND TELETEXTSIGNALEN**
RECEIVING DEVICE FOR RECEIVING VIDEO AND TELETEXT SIGNALS
APPAREIL RECEPTEUR POUR RECEPTION DE SIGNAUX VIDEO ET TELETEXTE

(30) Priorität: 22.04.1998 DE 19818048
(43) Veröffentlichungstag der Anmeldung: 07.02.2001
(73) Patentinhaber: Micronas Munich GmbH, 81541 München (DE)
(72) Erfinder: ENGLERT, Ulrich, D-81549 München (DE)
(74) Vertreter: Patentanwälte Westphal, Mussgnug & Partner
(86) Internationale Anmeldenummer: DE9900840
(87) Internationale Veröffentlichungsnummer: WO99055086

(56) Entgegenhaltungen:
- EP-A- 0 512 130
- WO-A-93/11632

## Beschreibung

Die Erfindung betrifft ein Empfangsgerät zum Empfangen von Video- und Teletextsignalen gemäß den Merkmalen des Oberbegriffs des Anspruchs 1.

Solche Empfangsgeräte sind die mittlerweile käuflichen Fernsehgeräte und Videorecorder, in welchen Teletextdecoder (auch Videotextdecoder genannt) integriert sind. Immer mehr Sendeanstalten gehen dazu über, neben Fernsehsendungen auch Zusatzinformationen für den Zuschauer in Form von Teletextseiten zu übertragen. Beim World-System-Teletext, kurz Teletext oder auch Videotext genannt, können die Teletextdaten für die auf dem Bildschirm darzustellenden Teletextseiten in den Fernsehzeilen 6 bis 23 und 318 bis 353 der Vertikalaustastlücke des Videosignals übertragen werden, sofern von einem 625-Zeilen-Fernsehsystem ausgegangen wird. Die fortlaufende Übertragung der Teletextdaten erfolgt in einem speziell verschlüsselten Format mit einer Bitrate von 6,9375 MHz und 360 Bit pro Teletextzeile. Jedes gesendete Teletextzeichen benötigt ein Byte mit 7 Datenbits und einem Paritätsbit. Eine Teletextseite besteht in der ersten Ausbaustufe (Level 1) des World-System-Teletext aus 24 Teletextzeilen, die jeweils zu Beginn Teletextadressdaten mit anschließenden Teletextdaten aufweisen.

Die erste Teletextzeile einer Teletextseite weist als Teletextadressdaten eine Magazinnummer mit anschließender Zeilennummer, Seitennummer, Seitenunternummer und Kontrollbits auf, an die sich 32 Byte Teletextdaten anschließen. Die Teletextzeilen 1 bis 23 dagegen verfügen als Teletextadressen nur über die Magazin- und die Zeilennummer. Die Seitennummern können zwischen 100 und 899 liegen, wobei die erste Ziffer die beim Teletextsystem vorhandenen 8 Magazine kennzeichnen.

Wenn eine fortlaufende Information mehr als eine Teletextseite benötigt, können Unterseiten übermittelt werden. Diese Unterseiten werden ebenfalls in der ersten Teletextzeile der Teletextseite gekennzeichnet.

Die von den Sendeanstalten gesendeten Teletextseiten werden zyklisch übertragen, d. h., nachdem alle in der Redaktion der Sendeanstalt enthaltenen Seiten gesendet wurden, ist ein Zyklus beendet. Im nächsten Zyklus werden dieselben Seiten erneut übertragen. Damit die Zykluszeit und folglich die Wartezeit auf der Empfangsseite für den Benutzer des Teletextdienstes noch zumutbar wird, ist die Anzahl der in einem Zyklus enthaltenen Teletextseiten begrenzt. Die Zykluszeit beträgt etwa 20 Sekunden. Die Seitenzahl pro Zyklus ergibt sich damit aus der Zykluszeit und der Anzahl der benutzten Teletextdatenzeilen je vertikaler Austastlücke.

Grundsätzlich werden die Teletextdaten zusammen mit den Videosignaldaten im vorgenannten Zeitraster mit übertragen, das bedeutet, daß die Teletextdaten in bestimmten, nicht auf dem Bildschirm erkennbaren Zeilen übertragen werden. Die Teletextdaten liegen hierbei am Empfängereingang, ebenfalls wie die Videosignale, in analoger Form vor. Um die Teletextdaten dekodieren zu können, werden diese regelmäßig mit einer geeigneten Schaltungsanordnung aus dem Videoeingangssignal herausgetrennt. Dies erfolgt mit einem sogenannten Daten-Slicer. Hierbei wird das Videoeingangssignal, im allgemeinen das CVBS-Signal, über einen Kondensator geklemmt und mittels einer Sample & Hold-Schaltung abgetastet, und anschließend in einem Analog-/Digital-Wandler digitalisiert. Das dann digitalisierte Teletextsignal wird einer Steuereinrichtung bzw. einem Kontrollblock zur Weiterverarbeitung zugeführt. Aus den digitalisierten Daten kann eine Syncinformation zurückgewonnen werden. Mit Hilfe dieser Syncinformation wird exakt festgelegt, zu welchen Zeitabschnitten die zu dekodierenden Teletextdaten übertragen werden.

Des weiteren sind bei solchen Empfangsgeräten eine Vielzahl von analogen Signalen zu digitalisieren, um in einem Mikrokontroller des Empfangsgerätes weiter verarbeitet werden zu können. Ein Beispiel für solche analoge Signale ist die Tastaturabfraqe einer Fernbedienung. Dort wird über Tastenbetätigung beispielsweise die Lautstärke oder die Helligkeit des auf einem Bildschirm dazustellenden Bildes von einer Bedienperson verändert. Dieses Signal liegt zunächst am Fernbedienungsempfänger in Form eines modulierten, analogen Signales vor, das zu Weiterverarbeitung im Mikrocontroller digitalisiert werden muss.

Die WO 93/11632 beschreibt eine Taktstufe, die unter anderem Teletextsignale digital verarbeitet, Korrekturdatensignale erhält und diese über einen Speicher und einen Analog-/Digital-Wandler an die Ablenkeinheit eines Bildschirms weiterleitet.

Die EP-A-0512130 beschreibt eine Vorrichtung zur Verarbeitung von Videosignalen für ein zeilenweise aufgebautes Bild, wobei die Vorrichtung eine Synchronabtrennstufe zur Erzeugung eines Synchrontaktsignales, das für die weitere Verarbeitung benötigt wird, aufweist. Einem Eingang einer Synchronisationseinrichtung ist dabei eine einen Klemmkondensator aufweisende Klemmschaltung mit nachgeschalteter Analog-/Digital-Wandlereinheit, die einen vorgegebenen Aussteuerbereich aufweist, vorgeschaltet, wobei durch die Klemmschaltung das Videosignal auf vorgegebene unterschiedliche Potentiale klemmbar ist. Ferner ist eine Steuereinrichtung vorgesehen, die mit der Klemmschaltung verbunden ist und die durch das Klemmen des Videosignales auf die vorgegebenen unterschiedlichen Potentiale so steuerbar ist, dass ein Synchronsignalanteil des Videosignales auf einen Klemmpegel innerhalb des Aussteuerbereiches der Analog-/Digital-Wandlereinrichtung gebracht wird.

Die Erfindung hat das Ziel, ein Empfangsgerät der eingangs genannten Art so weiter zu verbessern, daß dessen Aufbau im Vergleich zu herkömmlichen Empfangsgeräten vereinfacht und damit in der Herstellung kostengünstiger ist.

Dieses Ziel wird durch ein Empfangsgerät mit den Merkmalen des Anspruchs 1 gelöst.

Im wesentlichen weist das Empfangsgerät eine Teletextverarbeitungseinrichtung zum Dekodieren und Bereitstellen der dekodierten Teletextsignale auf, wobei die Teletextverarbeitungseinrichtung eingangsseitig eine Klemmschaltung mit nachgeschalteterAnalog-/Digital-Wandlereinrichtung sowie eine Steuereinrichtung zum zeitrichtigen Abtrennen der Teletextsignale aus dem Videoeingangssignal aufweist. Der Analog-/Digital-Wandlereinrichtung ist eine Umschalteinrichtung vorgeschaltet, welcher an eine erste Eingangsklemme als erstes Analogsignal des durch die Klemmschaltung geführte Videoeingangssignal an einer zweiten Eingangsklemme ein zweites Analogsignal zuführbar ist. Die Umschalteinrichtung ist von der Steuereinrichtung so steuerbar, daß in Zeitabschnitten, in welchen keine Teletextsignale aus dem Videoeingangssignal abzutrennen sind, das zweite Analogsignal der Analog-/Digital-Wandlereinrichtung zugeführt wird.

Das der Erfindung zugrundeliegende Prinzip liegt somit darin, daß die für die Verarbeitung der Teletextsignale vorgesehene Analog-/Digital-Wandlereinrichtung zweifach genutzt wird. In Zeitabschnitten, in denen keine Teletextsignalabtrennung bzw. keine Abtrennung von Signalen, die für die Teletextverarbeitung notwendig sind, aus dem Videoeingangssignal erfolgt, wird die Analog-/Digital-Wandlereinrichtung für andere Aufgaben, so zum Beispiel zur Abfrage von Tastatureingaben einer Bedienungseinheit, genutzt.

In einer Weiterbildung der Erfindung ist das zweite Analogsignal am Ausgang einer weiteren Umschalteinrichtung, auch Multiplexer genannt, abgreifbar, wobei der weiteren Umschalteinrichtung eingangsseitig mehrere Analogsignale zuführbar sind. Diese weitere Umschalteinrichtung wird ebenfalls von der bereits erwähnten Steuereinrichtung angesteuert. Diese Weiterbildung hat den Vorteil, daß unterschiedliche analoge Signale wahlweise der in der Teletextverarbeitungseinrichtung vorhandenen Analog-/Digital-Wandlereinrichtung zur Digitalwandlung zuführbar sind. Als Tastaturabfragesignal kann beispielsweise die Helligkeit-, Lautstärke-, Kontrasteinstellung oder dergleichen einer Fernbedienung des Empfangsgerätes vorgesehen werden. Das zweite Analogsignal kann auch ein AFC-Signal (Automatic-Frequence-Control-Signal) sein.

In einem Ausführungsbeispiel der Erfindung ist das Videoeingangssignal ein Fernsehsignal, wobei die Steuereinrichtung der Teletextverarbeitungseinrichtung den Schalter der Umschalteinrichtung mindestens zu den für die Syncsignalabtrennung notwendigen Zeitabschnitten und während des Empfangs der für die Teletextsignalübertragung vorgesehenen Zeitabschnitten an die erste Eingangsklemme der Umschalteinrichtung legt. Die Zeitabschnitte sind derzeitig so gewählt, daß diese beim Empfang des für die Videozeilen 6 bis 23 und/oder 318 bis 353 bestimmten Videoeingangssignals liegen. In diesen Zeitabschnitten wird der Schalter der Umschalteinrichtung an die erste Eingangsklemme gelegt, so daß die zu verarbeitenden Teletextsignale tatsächlich an die Analog-/Digital-Wandlereinrichtung gelangen. In den übrigen Zeitabschnitten ist der Schalter der Umschalteinrichtung an den zweiten Eingang gekoppelt, so daß die Analog-/Digital-Wandlereinrichtung der Teletextverarbeitungseinrichtung zur Digitalwandlung von anderen analogen Signalen zur Verfügung steht.

Vorzugsweise weist die Steuereinrichtung eine Detektionseinrichtung auf, in welcher erkannt wird, ob ein Teletextsignal an der Eingangsklemme der Teletextverarbeitungseinrichtung anliegt. Bei Nichtanliegen eines Teletextsignales wird der Schalter der Umschalteinrichtung ständig an die zweite Eingangsklemme gelegt. Die Detektionseinrichtung kann eine PLL-Schaltung aufweisen.

Die gesamte Schaltungsanordnung wird vorzugsweise in integrierter Form als integrierter Schaltkreis realisiert.

Zusammenfassend ist folgendes festzustellen. Mikrocontroller für Bedienfunktionen bzw. Fernsteuerfunktionen in Empfangsgeräten enthalten üblicherweise Analog-/Digitalwandler für allgemeine Steuerfunktionen, wie z. B. Tastaturabfrage, AFC-Steuerung, usw. Die Anforderung an solche Wandler sind frequenzmäßig relativ entspannt, d. h., daß keine sehr hohe Verarbeitungsgeschwindigkeit gewählt werden muß. Darüber hinaus weisen Empfangsgeräte mit Teletextdekoder einen integrierten Datenslicer mit einem Video-Analog-Digital-Wandler auf. Die Idee der vorliegenden Erfindung bestand deshalb darin, einen dieser notwendigen Analog-/Digital-Wandler einzusparen.

Die Erfindung wird nachfolgend im Zusammenhang mit einem Ausführungsbeispiel und Figuren näher erläutert. Es zeigen:
- Figur 1: Ein Blockschaltbild eines Fernsehgerätes zum Empfangen von Teletextsignalen mit einer Teletextverarbeitungseinrichtung,
- Figur 2: ein Blockschaltbild der in Figur 1 gezeigten Teletextverarbeitungseinrichtung, und
- Figur 3: schematisiert ein Halbbild, in welchem die für die Teletextübertragung und Synchronsignalübertragung reservierten Zeitabschnitte schraffiert markiert sind.

In den nachfolgenden Figuren bezeichnen, sofern nicht anders angegeben, gleiche Bezugszeichen gleiche Teile mit gleicher Bedeutung.

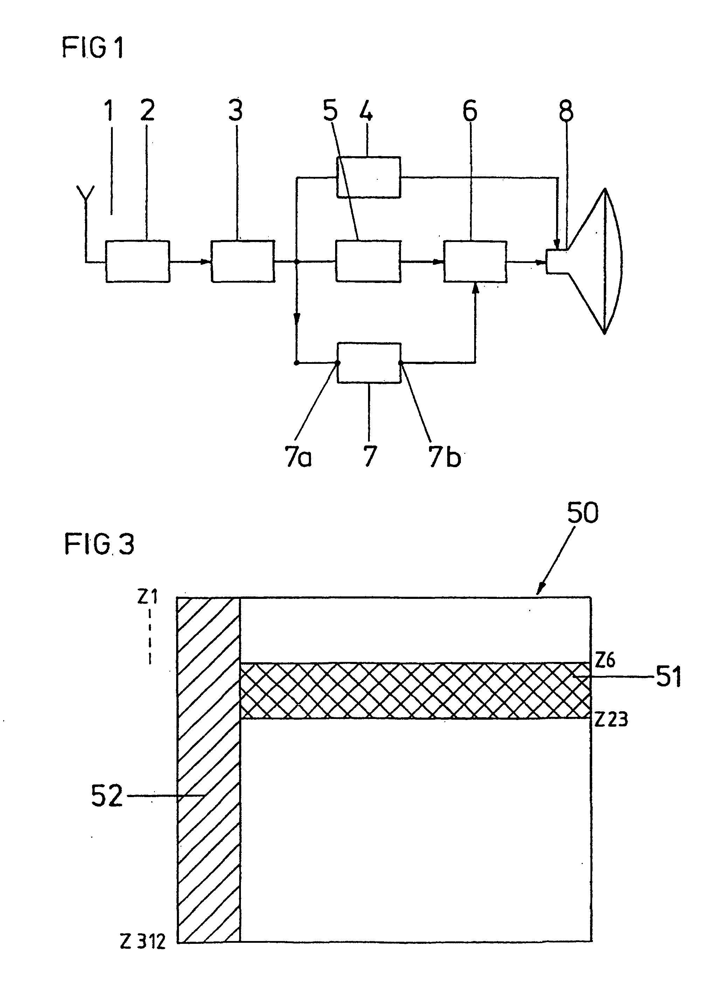

In Figur 1 ist im Blockschaltbild ein Fernsehgerät, das zur Darstellung von Fernsehbildern und Teletextinformationen geeignet ist, dargestellt. Das Empfangsgerät weist eingangsseitig einen Tuner 2 auf, der das HF-Eingangssignal beispielsweise von einer Antenne 1 empfängt. Dem Tuner 2 ist ein Video-ZF-Verstärker 3 nachgeschaltet, dessen Ausgangssignal sowohl einer Horizontal- und Vertikalablenkstufe 4 als auch einen Farbdekoder 5 mit nachgeschalteter Videoendstufe 6 zugeführt ist. Eine Bildröhre 8 wird von der Horizontal- und Vertikalablenkstufe 4 und der Videoendstufe 6 angesteuert. Eine im Empfangsgerät vorhandene Steuereinrichtung ist zur besseren Übersichtlichkeit in Figur 1 nicht dargestellt.

Zum Empfangen und Dekodieren der Teletextsignale, die in den Vertikalaustastlücken des Videosignals übertragen werden, ist der Ausgang der Video-ZF-Stufe 3 mit einer Teletextverarbeitungseinrichtung 7 verbunden. Die Teletextverarbeitungseinrichtung 7 ist als integrierter Schaltkreis ausgebildet und wird gewöhnlich als Teletextdekoder bezeichnet. Ein solcher Teletextdekoder erkennt die Teletextsignale im Videosignal und trennt mit einem sogenannten Datenslicer den Datenstrom dieser Teletextsignale vom Rest des Videosignals (Farbburst, Synchronsignale etc.). Darüber hinaus erzeugt die Teletextverarbeitungseinrichtung 7 einen Datentakt, der zum Datentakt des Teletextsignals synchronisiert ist. Anschließend erfolgt in der Teletextverarbeitungseinrichtung 7 die eigentliche Datenverarbeitung der Teletextsignale. Die bei der Datenverarbeitung der Teletextsignale ermittelten Teletextdaten werden in einer Speichereinrichtung abgelegt und dessen Inhalt über einen Zeichengenerator der Videoendstufe 6 des Empfangsgerätes zugeführt. Hierdurch ist eine Teletextseite auf der Fernsehbildröhre 8 des Empfangsgerätes bei Bedarf einblendbar.

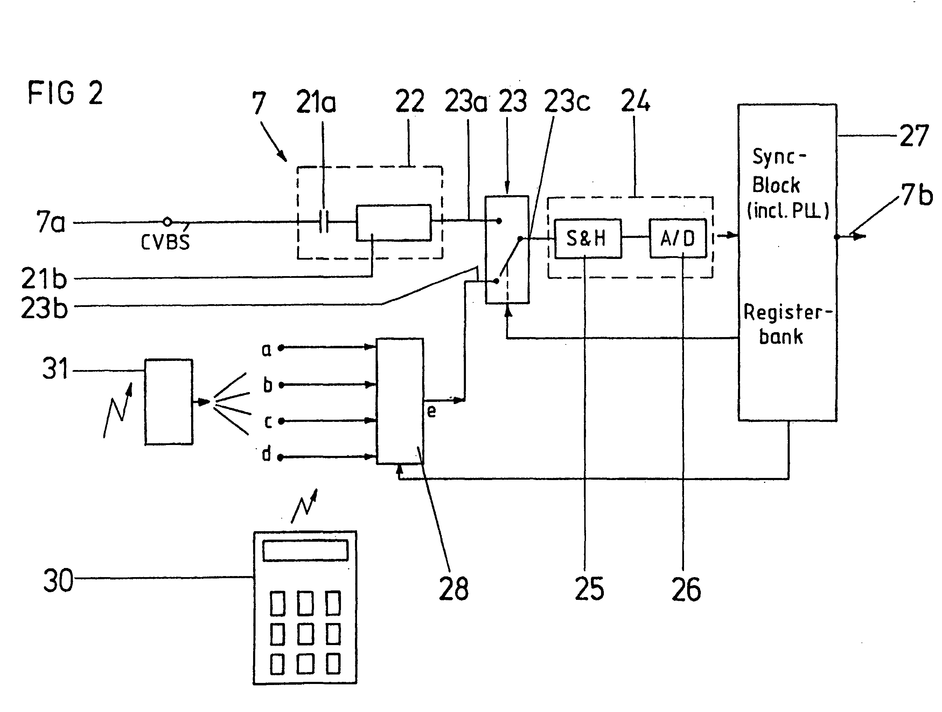

In Figur 2 ist schematisch die Schaltungsanordnung der Teletextverarbeitungseinrichtung 7 von Figur 1 detaillierter dargestellt. Mit dem Bezugszeichen 7a ist die Eingangsklemme der Teletextverarbeitungseinrichtung 7 und mit 7b deren Ausgangsklemme bezeichnet.

Die Eingangsklemme 7a ist mit dem Eingang einer Klemmschaltung 22 verbunden. Die Klemmschaltung 22 besteht im wesentlichen aus einem Kondensator 21a mit nachgeschalteter Elektronik 21b. Die Klemmschaltung 22 dient dazu, das an der Eingangsklemme 7a anstehende Videoeingangssignal auf ein vorgegebenes Bezugspotential zu beziehen, damit eine einwandfreie Weiterverarbeitung dieses Videoeingangssignales gewährleistet ist. Derartige Klemmschaltungen 22 sind als solche bekannt. Der Ausgang der Klemmschaltung 22 ist mit einer ersten Eingangsklemme 23a einer Umschalteinrichtung 23 in Verbindung. Die Umschalteinrichtung 23, auch Multiplexer genannt, hat eine zweite Eingangsklemme 23b und einen internen Schalter, der wahlweise eine Ausgangsklemme 23c der Umschalteinrichtung 23 mit einer der beiden Eingangsklemmen 23a, 23 b verbindet.

Der Ausgang 23c der Umschalteinrichtung 23 ist über eine Analog-/Digital-Wandlereinrichtung 24 mit einer Steuereinrichtung 27 in Kontakt. Die Analog-/Digital-Wandlereinrichtung 24 weist im vorliegenden Ausführungsbeispiel eingangsseitig eine Sample & Hold-Schaltung 25 mit nachgeschaltetem Analog-/Digital-Wandler 26 auf.

Der Ausgang der Analog-/Digital-Wandlereinrichtung 24 ist mit einer Steuereinrichtung 27 in Verbindung. Diese Steuereinrichtung 27 enthält einen Synchronisationsblock incl. PLL-Schaltung. Dieser Synchronisationsblock dient dazu, die Teletextsignale im Videoeingangssignal zu erkennen und den Datenstrom dieser Teletextsignale vom Rest des Videoeingangssignales abzutrennen. Darüber hinaus dient der Synchronisationsblock in der Steuereinrichtung 27 dazu, einen Datentakt zu erzeugen, der zum Datentakt des Teletéxtsignales synchronisiert ist. Zugleich erfolgt in der Steuereinrichtung 27 die eigentliche Datenverarbeitung der Teletextsignale. Die bei der Datenverarbeitung des Teletextsignales ermittelten Teletextdaten werden in einer Speichereinrichtung abgelegt und dessen Inhalt über einen Zeichengenerator der Ausgangsklemme 7b der Teletextverarbeitungseinrichtung zur Verfügung gestellt.

Die Steuereinrichtung 27 steuert die Schalterstellung der Umschalteinrichtung 23 in Abhängigkeit der eingegangenen Teletextsignale. Immer dann, wenn keine Teletextsignale zu verarbeiten sind, wird der Schalter der Umschalteinrichtung 23 in die in Figur 2 dargestellte Stellung gelegt, so daß die zweite Eingangsklemme 23b mit der Analog-/Digital-Wandler-Einrichtung 24 in Verbindung steht. An die zweite Eingangsklemme 23b der Umschalteinrichtung 23 können so weitere Analogsignale angelegt werden.

Im Ausführungsbeispiel von Figur 2 ist an die Eingangsklemme 23 b die Ausgangsklemme einer weiteren Umschalteinrichtung 28 geschaltet. An der Ausgangsklemme dieser weiteren Umschalteinrichtung 28 liegt ein analoges Signal e an, das aus im vorliegenden Ausführungsbeispiel vier verschiedenen analogen Eingangssignalen a, b,c und d auswählbar ist. Die Analogsignale a, b, c oder d können von einem Fernbedienungsempfänger 31 stammen, der über eine Fernbedienung 30 Tastaturabfragesignal erhält, die z. B. zur Helligkeits-, Lautstärke, Kontrastregelung oder dergleichen dienen.

Die Funktionsweise der in Figur 2 dargestellten Schaltungsanordnung stellt sich folgendermaßen dar. Das an der Eingangsklemme 7a anstehende Videoeingangssignal, das ein CVBS-Signal sein kann, wird über die Klemmschaltung 23 geklemmt und - sofern der Schalter der Umschalteinrichtung 23 an die erste Eingangsklemme 23a gelegt ist - in der Sample & Hold-Stufe 25 abgetastet. Die Analog-/Digital-Stufe 26 wandelt das analoge Signal in ein digitales Ausgangssignal und führt dieses der Steuereinrichtung 27 zur Weiterverarbeitung zu. Aus den digitalisierten Daten ermittelt die Steuereinrichtung 27 die Synchronisationsinformation und damit den Datentakt. Mit Hilfe der Synchronisationsinformation, die in dem Synchronisationsblock incl. der PLL-Schaltung ausgewertet wird, wird ein zeitliches Fenster bestimmt, in dem die Teletextdaten aus dem Videoeingangssignal CVBS abgetrennt werden müssen. Dieses zeitliche Fenster ist in Figur 3 anhand eines Halbbildes des Videoeingangssignales schematisch dargestellt. Das Halbbild ist mit dem Bezugszeichen 50 bezeichnet und weist Bildzeilen Z1 bis Z312 auf. Während der schraffierten Zeiten 51, 52, muß die Steuereinrichtung 27 dafür sorgen, daß der Schalter der Umschalteinrichtung 23 an die erste Eingangsklemme 23a gelegt ist. In den übrigen Zeiten kann der Schalter dagegen an die zweite Eingangsklemme 23b zur Verarbeitung von anderen Analogsignalen gelegt sein.

Der einfach schattierte Bereich in Figur 3 ist mit dem Bezugszeichen 52 bezeichnet und markiert die für die Synchronisationssignalabtrennung aus dem Videoeingangssignal notwendigen Zeiten. Der mit dem Bezugszeichen 51 bezeichnete Bereich betrifft das Videoeingangssignal für die Bildzeilen Z6 bis Z23. In diesen Bildzeilen, die am Bildschirm nicht dargestellt werden, werden die Teletextdaten übertragen. In den nicht schraffierten Zeitphasen steht die Analog-/Digital-Wandlereinrichtung 24 zur Digitalisierung von weiteren Analogsignalen zur Verfügung, weil die Steuereinrichtung 27 den Schalter der Umschalteinrichtung 23 an die zweite Eingangsklemme 23b geschaltet hält. Diese anderen analogen Signale sind keine teletextspezifischen Signale.

Vorzugsweise erzeugt die in der Steuereinrichtung 27 vorhandene PLL-Schaltung ein Lock-Signal mit dem erkannt wird, ob ein CVBS-Signal an der Eingangsklemme 7a der Teletextverarbeitungseinrichtung anliegt oder nicht. Im Falle der Abwesenheit, kann die Steuereinrichtung 27 dafür sorgen, daß der Schalter der Umschalteinrichtung 23 dauerhaft an die zweite Eingangsklemme 23b geschaltet ist.

## Patentansprüche

1. Empfangsgerät zum Empfangen von Video- und Teletextsignalen mit einer Videosignalverarbeitungseinrichtung (2, 3, 4, 5, 6) und einer Teletextverarbeitungseinrichtung (7) zum Dekodieren und Bereitstellen der dekodierten Teletextsignale für deren Darstellung, wobei die Teletextverarbeitungseinrichtung (7) eingangsseitig eine Klemmschaltung (22) mit nachgeschalteter Analog-/Digital-Wandlereinrichtung (24) sowie eine Steuereinrichtung (27) zum zeitrichtigen Abtrennen der Teletextsignale aus einem Videoeingangssignal (CVBS) aufweist, **dadurch gekennzeichnet, daß** der Analog-/Digital-Wandlereinrichtung (24) eine Umschalteinrichtung (23) vorgeschaltet ist, welcher an eine erste Eingangsklemme (23a) die Teletextsignale und an einer zweiten Eingangsklemme (23b) ein von den Videound Teletextsignalen unabhängiges Analogsignal (e) zuführbar ist, und daß die Umschalteinrichtung (23) von der Steuereinrichtung (27) derart steuerbar ist, daß in Zeitabschnitten, in welchen keine Teletextsignale aus dem Videoeingangssignal abtrennbar sind, das von den Video- und Teletextsignalen unabhängige Analogsignal der Analog-/Digital-Wandlereinrichtung (24) zuführbar ist.

2. Empfangsgerät nach Anspruch 1,
**dadurch gekennzeichnet, daß** das von den Video- und Teletextsignalen unabhängige Analogsignal (e) am Ausgang einer weiteren Umschalteinrichtung (28) abgreifbar ist, und daß der weiteren Umschalteinrichtung (28) eingangsseitig mehrere Analogsignale (a, b, c, d) zuführbar sind.

3. Empfangsgerät nach Anspruch 1 oder 2,
**dadurch gekennzeichnet, daß** das von den Video- und Teletextsignalen unabhängige Analogsignal (a, b, c, d, e) ein Tastaturabfragesignal einer drahtlosen oder drahtgebundenen Eingabeeinheit (30) des Empfangsgeräts ist.

4. Empfangsgerät nach Anspruch 3,
**dadurch gekennzeichnet, daß** das Tastaturabfragesignal zur Helligkeits-, Lautstärke-, Kontrasteinstellung oder dgl. des Empfangsgeräts vorgesehen ist.

5. Empfangsgerät nach Anspruch 1 oder 2,
**dadurch gekennzeichnet, daß** das von den Video- und Teletextsignalen unabhängige Analogsignal ein AFC-Signal ist.

6. Empfangsgerät nach einem der Ansprüche 1 bis 5,
**dadurch gekennzeichnet, daß** das Videoeingangssignal ein CVBS-Signal ist.

7. Empfangsgerät nach einem der Ansprüche 1 bis 6,
**dadurch gekennzeichnet, daß** das Videoeingangssignal (CVBS) ein Fernseheingangssignal ist, daß die Steuereinrichtung (27) den Schalter der Umschalteinrichtung (23) mindestens zu den für die Syncsignalabtrennung notwendigen Zeitabschnitten und während des Empfangs der für die Teletextsignalübertragung vorgesehenen Zeitabschnitten an die erste Eingangsklemme (23a) legt.

8. Empfangsgerät nach Anpruch 7,
**dadurch gekennzeichnet, daß** während des Empfangs des für die Videozeilen 6 bis 23 eines Halbbildes bestimmten Videoeingangssignals der Schalter der Umschalteinrichtung (23) an die erste Eingangsklemme (23a) gelegt ist.

9. Empfangsgerät nach Anspruch 7 oder 8,
**dadurch gekennzeichnet, daß** in den übrigen Zeitabschnitten der Schalter der Umschalteinrichtung (23) an den zweiten Eingang 23b) gekoppelt ist.

10. Empfangsgerät nach einem der Ansprüche 1 bis 9,
**dadurch gekennzeichnet, daß** die Steuereinrichtung (27) eine Detektionseinrichtung aufweist, in welcher erkannt wird, ob ein Teletextsignal an der Eingangsklemme (7a) der Teletextverarbeitungseinrichtung (7) anliegt, und daß bei Nichtanliegen eines Teletextsignales der Schalter der Umschalteinrichtung (23) ständig an die zweite Eingangsklemme gelegt ist.

11. Empfangsgerät nach einem der Ansprüche 1 bis 10,
**dadurch gekennzeichnet, daß** das die Detektionseinrichtung eine PLL-Schaltung aufweist.

## Claims

1. A receiver for receiving video and teletext signals, having a video signal processing device (2, 3, 4, 5, 6) and a teletext processing device (7) for decoding and providing the decoded teletext signals for display thereof, the teletext processing device (7) comprising on the input side a clamp circuit (22) with downstream analog/digital converter device (24) and a control device (27) for isochronous separation of the teletext signals from a video input signal (CVBS),
**characterised in that** upstream of the analog/digital converter device (24) there is connected a switching device (23), to which the teletext signals may be supplied at a first input terminal (23a) and an analog signal (e) independent of the video and teletext signals may be supplied at a second input terminal (23b), and **in that** the switching device (23) may be controlled by the control device (27) in such a way that the analog signal independent of the video and teletext signals may be supplied to the analog/digital converter device (24) in periods in which no teletext signals are separable from the video input signal.

2. A receiver according to claim 1,
**characterised in that** the analog signal (e) independent of the video and teletext signals may be picked off at the output of a further switching device (28), and **in that** a plurality of analog signals (a, b, c, d) may be supplied to the further switching device (28) on the input side.

3. A receiver according to claim 1 or claim 2,
**characterised in that** the analog signal (a, b, c, d, e) independent of the video and teletext signals is a keyboard scanning signal of a wireless or wired input unit (30) of the receiver.

4. A receiver according to claim 3,
**characterised in that** the keyboard scanning signal is provided for brightness, volume, contrast adjustment or the like of the receiver.

5. A receiver according to claim 1 or claim 2,
**characterised in that** the analog signal independent of the video and teletext signals is an AFC signal.

6. A receiver according to one of claims 1 to 5,
**characterised in that** the video input signal is a CVBS signal.

7. A receiver according to one of claims 1 to 6,
**characterised in that** the video input signal (CVBS) is a television input signal, **in that** the control device (27) applies the switch of the switching device (23) to the first input terminal (23a) at least in the periods necessary for sync signal separation and during reception of the periods provided for teletext signal transmission.

8. A receiver according to claim 7,
**characterised in that** the switch of the switching device (23) is applied to the first input terminal (23a) during reception of the video input signal intended for video lines 6 to 23 of a field.

9. A receiver according to claim 7 or claim 8,
**characterised in that** in the remaining periods the switch of the switching device (23) is coupled to the second input (23b).

10. A receiver according to one of claims 1 to 9,
**characterised in that** the control device (27) comprises a detection device in which it is detected whether a teletext signal is present at the input terminal (7a) of the teletext processing device (7), and **in that**, in the absence of a teletext signal, the switch of the switching device (23) is constantly applied to the second input terminal.

11. A receiver according to one of claims 1 to 10,
**characterised in that** the detection means comprises a PLL circuit.

## Revendications

1. Récepteur permettant de recevoir des signaux vidéo et des signaux de télétexte à l'aide d'un dispositif de traitement du signal vidéo (2, 3, 4, 5, 6) et d'un dispositif de traitement de télétexte (7) afin de décoder et de préparer les signaux décodés pour leur représentation, dans lequel le dispositif de traitement de télétexte (7) possède, du côté de l'arrière, un circuit de blocage (22) avec un dispositif de conversion (24) analogique/numérique connecté en aval, ainsi qu'un dispositif de commande (27) permettant de séparer au bon moment les signaux de télétexte du signal d'arrivée vidéo (CVBS),
**caractérisé en ce qu'**
un dispositif de commutation (23) est connecté en amont du dispositif de conversion (24) analogique/numérique, dispositif de commutation vers lequel peuvent être amenés, sur une première borne de connexion d'arrivée (23a) les signaux de télétexte et sur une deuxième borne de connexion d'arrivée (23b) un signal analogique (e) indépendant des signaux vidéo et des signaux de télétexte, et le dispositif de commutation (23) peut être réglé par le dispositif de commande (27) de telle sorte que le signal analogique indépendant des signaux vidéo et des signaux de télétexte peut être amené au dispositif de conversion (24) analogique/numérique sur des intervalles de temps dans lesquels aucun signal de télétexte ne peut être séparé du signal d'arrivée vidéo.

2. Récepteur selon la revendication 1,
**caractérisé en ce que**
le signal analogique (e) indépendant des signaux vidéo et des signaux de télétexte peut être prélevé en sortie d'un autre dispositif de commutation (28) et **en ce que** plusieurs signaux analogiques (a, b, c, d) peuvent être amenés vers l'autre dispositif de commutation (28) du côté de l'arrivée.

3. Récepteur selon la revendication 1 ou 2,
**caractérisé en ce que**
le signal analogique (a, b, c, d, e) indépendant des signaux vidéo et des signaux de télétexte est un signal d'interrogation par clavier d'une unité de saisie (30) avec ou sans fil du récepteur.

4. Récepteur selon la revendication 3,
**caractérisé en ce que**
le signal d'interrogation par clavier est prévu pour le réglage de la luminosité, du son et du contraste ou autre paramètre du récepteur.

5. Récepteur selon la revendication 1 ou 2,
**caractérisé en ce que**
le signal analogique indépendant des signaux vidéo et des signaux de télétexte est un signal AFC.

6. Récepteur selon l'une des revendications 1 à 5,
**caractérisé en ce que**
le signal d'entrée vidéo est un signal CVBS.

7. Récepteur selon l'une des revendications 1 à 6,
**caractérisé en ce que**
le signal d'entrée vidéo (CVBS) est un signal d'entrée de télévision et le dispositif de commande (27) place le commutateur du dispositif de commutation (23) au moins sur les intervalles de temps nécessaires pour la séparation synchrone des signaux, et place le commutateur du dispositif de commutation, lors de la réception des intervalles de temps prévus pour la transmission du signal de télétexte, sur la première borne de connexion d'arrivée (23a).

8. Récepteur selon la revendication 7,
**caractérisé en ce que**
lors de la réception du signal d'entrée vidéo défini pour les lignes vidéo 6 à 23 d'une demi-image, le commutateur du dispositif de commutation (23) est placé sur la première borne de connexion d'arrivée (23a).

9. Récepteur selon la revendication 7 ou 8,
**caractérisé en ce que**
pour les intervalles de temps habituels, le commutateur du dispositif de commutation (23) est couplé à la deuxième arrivée (23b).

10. Récepteur selon l'une des revendications 1 à 9,
**caractérisé en ce que**
le dispositif de commande (27) possède un dispositif de détection dans lequel il est possible de savoir si un signal de télétexte est positionné sur la borne de connexion d'arrivée (7a) du dispositif de traitement du télétexte (7), et si aucun signal de télétexte n'est positionné sur la borne de connexion d'arrivée du dispositif de traitement du télétexte, le commutateur du dispositif de commutation (23) se trouve toujours sur la deuxième borne de connexion d'arrivée.

11. Récepteur selon l'une des revendications 1 à 10,
**caractérisé en ce que**
le dispositif de détection possède un circuit PLL.
